**Europäisches Patentamt**

**European Patent Office**

**Office européen des brevets**

(19)

(11) Veröffentlichungsnummer : **0 200 816**
**B1**

(12) **EUROPÄISCHE PATENTSCHRIFT**

(45) Veröffentlichungstag der Patentschrift :
11.10.89

(51) Int. Cl.⁴ : **E 02 D 31/00**, E 02 D 19/18,
B 09 B 1/00

(21) Anmeldenummer : 85114114.3

(22) Anmeldetag : 06.11.85

(54) Nachträgliche Abdichtung von Deponien und kontaminierten Flächen.

(30) Priorität : 10.05.85 DE 3516822

(43) Veröffentlichungstag der Anmeldung :
12.11.86 Patentblatt 86/46

(45) Bekanntmachung des Hinweises auf die Patenterteilung : 11.10.89 Patentblatt 89/41

(84) Benannte Vertragsstaaten :
AT BE CH DE FR GB IT LI NL SE

(56) Entgegenhaltungen :
WO-A-84 /033 15
DE-A- 2 138 123
DE-A- 2 250 635
DE-A- 3 330 897
DE-A- 3 416 568
US-A- 4 194 855

(73) Patentinhaber : **Niederberg-Chemie GmbH**
**Postfach 11 63**
**D-4133 Neukirchen-Vluyn (DE)**

(72) Erfinder : **Schlütter, Aloys**
**Rheinstrasse 42**
**D-4152 Kempen 3 (DE)**
Erfinder : **Kaewert, Klaus**
**Gänsestrasse 4**
**D-4000 Düsseldorf 13 (DE)**

Jouve, 18, rue St-Denis, 75001 Paris, France

EP 0 200 816 B1

## Beschreibung

Die Erfindung betrifft ein Verfahren zur nachträglichen Abdichtung von Deponien und/oder kontaminierten Flächen, wobei unter die Deponie und/oder kontaminierte Fläche eine Abdichtung gebracht wird und das Erdreich unter der Deponie und/oder der kontaminierten Fläche eine Rücklage für die Abdichtung bildet.

In der Vergangenheit wurden Deponien, insbesondere Mülldeponien, häufig mit unzureichender Abdichtung zum Grundwasser hin oder überhaupt ohne Abdichtung errichtet, so daß aus diesen mit dem Oberflächenwasser Schadstoffe in den Boden einsickern und in das Grundwasser gelangen können. Das gleiche gilt für kontaminierte Flächen, z. B. Industrieflächen, auf denen chemische Rückstände, insbesondere Kohlenwasserstoffverbindungen und/oder Schwermetalle sich niedergeschlagen haben.

Es ist bekannt, Mülldeponien dadurch nachträglich abzudichten, daß diese von seitlichen Dichtungswänden eingepaßt werden. Die seitlichen Dichtungswände werden als Schlitzwände in das Erdreich eingebracht und zwar so tief, bis wasserundurchlässige Schichten erreicht werden. Dieses Verfahren versagt, wenn dichtende Schichten nicht vorhanden sind oder so tief liegen, daß die Schlitzwände nicht wirtschaftlich darstellbar sind und/oder die Gefahr einer Änderung der Grundwasserverhältnisse und/oder der Bodenverhältnisse besteht.

In all diesen Fällen ist eine Horizontalabdichtung unterhalb der Deponie und/oder der kontaminierten Flächen unabdingbar. Bislang besteht dazu nur die Möglichkeit einer Umsetzung der Deponie bzw. des kontaminierten Erdreiches. Es ist aber auch schon vorgeschlagen worden. Deponien ohne Umsetzung nachträglich mit einer Horizontalabdichtung zu versehen. Das soll mit Hilfe von Folien erreicht werden, die mit Hilfe von Schneidvorrichtungen am Folienanfang unter der Deponie durchgetrieben werden.

Aus der DE-A 33 30 897 ist bereits ein Verfahren zur nachträglichen Abdichtung bekannt geworden. Dieses Verfahren sieht vor, daß die Grundfläche der Deponie in unmittelbar nebeneinanderliegende Flächenabschnitte aufgeteilt wird. An deren Nahtstelle werden Pilotbohrungen als gesteuerte Zielbohrungen von Startschächten zu gegenüberliegenden Zielschächten ausgeführt. In die Pilotbohrungen werden Leitelemente eingeführt, deren Anfang und Ende sich in den gegenüberliegenden Start- bzw. Zielschächten befinden. Die Einrichtung dient zur Führung und Versorgung von Räumen- und Injektionseinrichtungen. Mit Hilfe der Injektionseinrichtungen soll ein flüssiges Dichtungsmittel injiziert werden. Dabei stellt sich das Problem, daß das flüssige Dichtungsmittel sich zu einer geschlossenen Abdichtung zusammenfinden muß.

Der Erfindung liegt die gleiche Aufgabe wie dem älteren Vorschlag und der DE-A 33 30 897 zugrunde. Nach der Erfindung wird eine Abdichtung jedoch dadurch erreicht, daß nacheinander Profilstränge eingezogen oder eingeschoben werden, die sich beim Einziehen zu einer Abdichtungsbahn verbinden, wobei die Abdichtungsbahn mit einer Neigung und/oder Wölbung verlegt wird, so daß an der tiefsten Stelle der Abdichtungsbahn die anfallenden Sickerwässer gesammelt und abgeführt werden können.

Die Profilstränge können aus Materialien geringer Steifigkeit oder hoher Steifigkeit bestehen. Materialien mit geringer Steifigkeit werden gezogen. Materialien hoher Steifigkeit, insbesondere Profilstränge aus Stahlrohren, lassen sich auch durchschieben. Wahlweise werden Profilstränge unterschiedlicher Steifigkeit miteinander kombiniert. Z. B. wird als erster zu verlegender Profilstrang besonders biege- und/oder verwindungssteifes Material und/oder eine biege- und/oder verwindungssteife Konstruktion verwendet, um Abweichungen von der gewünschten Bahn nach Möglichkeit zu vermeiden. Der erste verlegte Profilstrang bestimmt die Lage der nachfolgenden Profilstränge mit, indem er als Führung für die nachfolgenden Profilstränge und/oder das zum Einbringen der Profilstränge verwendete Werkzeug dient.

Zwar ist aus der DE-A 22 50 635 ein Verfahren zum Bau eines Tunnels bekannt, bei dem Stahlrohre in die Erde nacheinander eingetrieben werden und sich beim Eintreiben miteinander verbinden. Dies Verfahren betrifft jedoch nicht die nachträgliche Abdichtung von Deponien und ist im übrigen dadurch gekennzeichnet, daß diese Stahlrohre ein sich selbst tragendes Gewölbe bilden, das unterhalb einer Deponie nicht in Betracht kommt.

Eine sehr genaue Ausrichtung des ersten Profilstranges läßt sich dadurch erreichen, daß der Strang seitlich neben der Deponie und/oder kontaminierten Fläche in offener Baugrube verlegt wird. Anschließend kann das ausgehobene Erdreich wieder eingebracht werden. Dann ist eine Verdichtung des Erdreiches von Vorteil, um die ursprüngliche Bodenbeschaffenheit im Bereich des verlegten Profilstranges wiederherzustellen. Eine auf diesem Wege hergestellte, homogene Bodenbeschaffenheit erleichtert das Einbringen nachfolgender Profilstränge bzw. verhindert ein unerwünschtes Auswandern aufgrund unterschiedlicher Widerstände am Umfang des zum Einbringen der Profilstränge verwendeten Werkzeuges bzw. am Umfang der Profilstränge.

Statt mit einer Wiederherstellung der ursprünglichen Bodenbeschaffenheit kann auch durch eine geeignete Fixierung oder Arretierung des ersten verlegten Profilstranges ein wesentlicher Beitrag zum einwandfreien Einbringen nachfolgender Profilstränge geleistet werden. Das geschieht z. B. durch Einbindung des ersten verlegten Profilstranges in eine vertikale Abdichtungswand. Eine solche vertikale Abdichtungswand kann aus Erdbeton und/oder Kunststoffolien gebildet werden. Der Erdbeton hat etwa folgendes Mischungsverhältnis :

1 400 kg Sand, 90 kg Rohtonmehl, rd. 15 kg Kalk oder Zement.

Eine weitere Möglichkeit zur genauen Einbringung des ersten verlegten Profilstranges besteht darin, das Erdreich in Abständen auszuheben und die Bahnen des ersten Profilstranges zu messen und zu korrigieren. Die Korrektur erfolgt durch erneutes Ausrichten. Vorzugsweise liegen die Abstände, in denen gemessen und korrigiert wird, zwischen 5-20 m.

Nach der Erfindung sind die Profilstränge im Querschnitt so ausgebildet, daß sie sich beim Durchschieben oder Durchziehen miteinander zu einer Abdichtungsbahn verbinden und/oder anschließend eine Verbindung zwischen den Profilsträngen herstellbar ist.

Die Entstehung von Sickerwasser kann durch eine Abdeckung der Deponie und/oder kontaminierten Fläche entgegengewirkt werden oder aber die Entstehung von Sickerwasser sogar gefördert werden. D. h. zusätzlich zu dem naturgemäß durch Regen anfallenden Sickerwasser wird zusätzliches Wasser durch eine fortlaufende Berieselung oder eine diskontinuierliche Berieselung aufgegeben. Diese Berieselung bewirkt eine Durchfeuchtung der Deponie und/oder kontaminierten Fläche und in relativ kurzer Zeit ein Auswaschen der grundwassergefährdenden Schadstoffe. Vor Einleitung in das Grundwasser werden die anfallenden Sickerwässer einer Wasseraufbereitung zugeführt. Zur Wasseraufbereitung eignet sich ein Aktivkohlefilter. Die Aktivkohle kann nach Verschmutzung des Filters regeneriert oder aber umweltfreundlich in geeigneten Anlagen verbrannt werden.

Das Abziehen der Sickerwässer wird durch eine geneigte Anlegung der Abdichtung erleichtert. Besonders vorteilhaft ist eine V-förmige Anlegung der Abdichtungsbahn bzw. eine bogen- oder kalottenförmige Ausbildung der Abdichtung.

Die V-Form entsteht durch 2 geneigt gegeneinanderstoßende Flächen der Abdichtungsbahn. Die Stoßstelle befindet sich vorzugsweise mittig unter der Deponie bzw. kontaminierten Fläche. Bei einer solchen Ausbildung der Abdichtungsbahn verringert sich der Aufwand für den stirnseitig erforderlichen Aushub an Erdreich und die dort (vorn und hinten) anzubringende Vertikalabdichtung. Ähnliche Verhältnisse ergeben sich bei einer im Querschnitt bogenförmigen Abdichtungsbahn. Die Abdichtungsbahn hat dann über ihre ganze Länge die Form eines Zylindermantels oder eines anderen Mantels mit beliebiger Krümmung. Der erforderliche Aushub an Erdreich und Aufwand für Vertikalabdichtungen kann mit Hilfe einer kalottenförmigen Ausbildung der Abdichtungsbahn verringert werden. Die Kalottenform bedingt unterschiedliche Profilstranglängen, wenn die Profilstränge (projiziert auf eine horizontal verlaufende Fläche) parallel nebeneinander verlaufen. Zugleich ergeben sich unterschiedliche Krümmungsradien. Beides kann z. B. von einem Modell abgenommen und unter entsprechender Übersetzung auf das zum Einbringen der Profilstränge verwendete Gerät übertragen werden. Die Steuerung des Gerätes kann auch von einem Rechner ausgeführt werden. Sowohl mit Hilfe des Modelles als auch mit Hilfe eines Rechners lassen sich kalottenähnlich gewölbte Abdichtungsbahnen für andere Deponien und/oder kontaminierte Flächen herstellen, die eckig und/oder unregelmäßig gekrümmt verlaufen.

Bei kalottenförmig oder kalottenähnlich gewölbten Abdichtungsbahnen entsteht eine Trichterform mit vorteilhaften Möglichkeiten zum Abzug der Sickerwässer.

Die anfallenden Sickerwässer können zunächst im Kreis geführt werden, d. h. auf die kontaminierte Fläche rückgeführt werden, bis das Wasser eine so hohe Beladung mit grundwassergefährdenden Schadstoffen aufweist, daß eine wirtschaftliche Entsorgung der anfallenden Sickerwässer in Wasseraufbereitungsanlagen gegeben ist.

Die erfindungsgemäße Zusammensetzung der Abdichtung aus Profilsträngen ermöglicht es, einen Profilstrang am anderen zu führen. Das sichert eine genaue Lage der Profilstränge und vereinfacht die Herstellung der Abdichtung ganz wesentlich.

Eine zugfeste Verbindung der Profilstränge ergibt sich, wenn die Feder eine etwas kreisförmige oder ovale oder ähnliche Querschnittsform aufweist und die Nut in einem die Feder nach Art eines geschlitzten Rohres umfassenden Teil des Profilstranges liegt. Insbesondere kreisförmige Querschnitte lassen sich genau herstellen.

Desgleichen kommen eckige Querschnittsformen für die Nut und Feder in Betracht. Von Vorteil ist auch hier das Hintergreifen der Feder.

Extrem hohe Widerstandwerte gegen ein Lösen der Feder aus der Nut entstehen bei einem Querschnitt, der hakenförmig oder nach Art eines Widerhakens ausgebildet ist.

Nach der Erfindung besitzt die Nut ein geringes Übermaß gegenüber der Feder. Das sichert ein leichtgängiges Ineinanderschieben auch über mehrere 100 m Profilstranglänge. Während das Einziehen noch ohne wesentliche Belastung der Profilstränge aus dem darüberliegenden Erdreich erfolgen kann, ist mit zunehmender Unterschreitung des Erdreiches eine Belastung der Profilstränge unausweichlich. Diese vorteilhaften Verhältnisse ergeben sich insbesondere bei einem ziehenden Werkzeug, das einen geringfügig größeren Durchmesser bzw. geringfügig größere Abmessungen als der nachgezogene Profilstrang aufweist. Dieses Werkzeug verdrängt das Erdreich und bildet dabei ein selbsttragendes Gewölbe. Das gilt vor allem für kleinere Durchmesser wie beispielsweise 200 mm und weniger. Nach dem Einbrigen weiterer Profilstränge bricht dieses Gewölbe zusammen und drückt auf die Profilstränge. Dabei werden die die Schenkel der Nut bildenden Materialteile jeden Profilstranges gegen die dazwischenliegende Feder gedrückt und entsteht bereits eine hohe Dichtwirkung.

Die Abdichtung zwischen Nut und Feder kann durch Dichtmittel noch weiter verbessert werden. Als Dichtmittel kommen unter anderem aushärtende Kunststoffe in Betracht. Die Dichtmittel können an verschiedenen Stellen eingepreßt werden. Dafür geeignet ist der Zwischenraum zwischen Nut und Feder am Nut tiefsten Punkt. Dies bewirkt bei den oben beschriebenen Querschnittsformen eine zuverlässige Abdichtung, wobei Nut und Feder dichtend gegeneinander gepreßt werden und die Hohlräume schließend ausgefüllt werden.

Das Dichtmittel läßt sich auch mit Hilfe der Feder einbringen. Dazu ist eine rohrförmige Feder vorgesehen. Für die Abdichtung stehen dann verschiedene Alternativen zur Verfügung. Wahlweise ist das die Feder bildende Rohr elastisch und mit Hilfe des Dichtmittels aufblähbar oder aufweitbar. Diese Aufweitung kann dadurch unterstützt werden, daß die rohrförmige Feder im Querschnitt eine Einwärtswölbung oder eine Einwärtsfaltung besitzt und sich infolge Druckbeaufschlagung leicht auswölbt. Die Auswölbung kann auch mit Hilfe der Druckbeaufschlagung durch eine ausschließliche Materialdehnung verursacht werden. Eine perforierte und/oder poröse des die Feder bildenden Rohres ermöglicht auch einen Dichtmittelaustritt in den Zwischenraum zwischen Feder und Nut.

Des weiteren kommt die Verwendung eines mitgezogenen, separaten Schlauches oder Rohres in Betracht, der mit Druck beaufschlagt wird und die oben beschriebenen Dichtfunktionen der als Rohr ausgebildeten Feder übernimmt. Dieses Rohr oder Schlauch wird entweder an der Feder oder in der Nut montiert. Der Schlauch oder das Rohr kann auch je nach Übermaß der Nut gegenüber der Feder lose mitgezogen werden.

Als Werkzeug zum Einziehen der erfindungsgemäßen Profilstränge eignet sich besonders eine druckluftgetriebene Ramme. Die Ramme arbeitet sich als Verdrängungsgerät selbsttätig durch das Erdreich bzw. durch die Deponie. Solch ein Schlagwerkzeug besteht aus einem hin- und hergehend bewegten Kopf und einem dahinter angeordneten Gehäuse. Der Kopf wird in Vortriebsrichtung stark beschleunigt. Bei der Rückkehr in die Ausgangslage wird der Kopf weniger stark beschleunigt. Die gewünschte Vortriebswirkung läßt sich auch erreichen, wenn das Gehäuse einer Rückwärtsbewegung entgegenwirkt. Das kann durch entsprechende Ausgestaltung des Gehäusemantels erfolgen.

Das Schlagwerkzeug kann den bereits eingebrachten, zur Führung dienenden Profilstrang umfassen oder in diesen Profilstrang geführt sein. Vorzugsweise umfaßt der Gehäusemantel des Werkzeuges den bereits gelegten Profilstrang. Vorzugsweise füllt der den bereits gelegten Profilstrang umfassende Gehäusemantel den Querschnitt der den bereits gelegten Gehäusemantel umgebenden Erdbohrungen aus. Dadurch hat das Rammgerät ein nicht nur an dem bereits gelegten Profilstrang sondern auch in der vorher eingebrachten Erdbohrung eine Führung. Damit werden Hohlräume beseitigt, die sonst bei der Vorwärtsbewegung des Werkzeuges einen geringeren Verformungswiderstand des Erdreiches verursachen, der ein Auswandern des Werkzeuges in diese Richtung zur Folge hat.

Die Anordnung der Profilstränge läßt sich zusätzlich dadurch steuern, daß einer Verwindung oder Drehbewegung des einzuziehenden Profilstranges entgegengewirkt wird. Bei dem ersten einzuziehenden Profilstrang kann dem u. a. durch eine Kontrolle der Umfangsbewegung des eingezogenen Stranges Rechnung getragen werden. Besonders genau ist eine Steuerung mit Hilfe hohler Profilstränge und in den Profilsträngen mitlaufender Wellen bzw. Stangen, die jeweils nur unmittelbar am vorderen Profilstrangende mit diesem bzw. dem Schlagwerkzeug in Eingriff stehen. Zur Steuerung des Rammgerätes eignet sich auch ein sich aus Scheiben zusammensetzender Bohrkopf, dessen Spitze aus der Mitte herausbewegt werden kann.

Profilstränge, die am Umfang mehrere Verbindungsstellen aufweisen, eignen sich zur Erzeugung besonderer Formen der Abdichtung. Dazu gehört eine Trichterform oder eine gewölbte Form oder eine Kalottenform der Abdichtung. Die Profilstränge sind dazu im Querschnitt rund oder vieleckig ausgebildet. Aus Gründen der Materialersparnis und besonderen Verformungsverhaltens bieten sich rohrförmige Profilstränge an. Die Profilstränge umgreifen einander und/oder sind miteinander verzahnt. Das Umgreifen stellt im weitesten Sinne die oben erläuterte Verbindung Nut-Feder dar, die in der zugfesten Auslegung in der quer zur Profilstranglängsrichtung verlaufenden Richtung ein sogenanntes Schloß bilden. Die Verzahnung wird durch eine Mehrfachverbindung gebildet, indem jeder Profilstrang mit mehreren Federn bzw. mehreren Nuten versehen ist. Hierfür bieten sich insbesondere Profilstränge mit viereckigem bzw. rechteckigem Querschnitt an. Solchermaßen geformte Profilstränge sind geeignet, an der zur Deponie bzw. kontaminierten Fläche hingewandten Seite eine im wesentlichen ebene Fläche zu bilden. An dieser ebenen Fläche laufen Sickerwässer gut ab. Hinzu kommt ein besonders guter Halt der bereits verlegten Profilstränge im Erdreich. Dieser Halt trägt zur genauen Führung des nachfolgend verlegten Profilstranges bei.

Ein weiterer Vorteil der rohrförmigen Profilstränge ist die Möglichkeit einer mehrlagigen Abdichtung, die zu einer Leckanzeige und/oder einer gezielten Sammlung der anfallenden Sickerwässer und/oder der nachträglichen Einpressung von Dichtmitteln im Falle ermittelter Leckstellen der Abdichtung förderlich sind. Die Rohre sind zur Aufnahme von Sickerwässern nach oben hin porös. Diese Porösität kann auch zum Verpressen von Dichtmitteln förderlich sein. Zum Zwecke der Einpressung von Dichtmitteln werden die Rohre auf der Unterseite geschlossen ausgebildet.

Das Dichtmittel kann auch ohne Auftreten einer Leckstelle zur Verstärkung der Abdichtung eingedrückt werden. Desgleichen kommt zur Verstärkung der Abdichtung das Einpressen anderer Mittel in Betracht. Dazu gehören Zementschlämme und Gipsschlämme bzw. Alphasulphathalbhydratschlämme oder Betasulphathalbhydratschlämme, die aus Rückstanden der Abgaswäsche von Kraftwerken mit Kalkmilch entstehen oder in sonstiger Weise anfallen.

Der Verbindung zweier benachbarter Profilstränge ist es förderlich, wenn der vom anderen Profilstrang umfaßte Strangteil sich unter Last, also unter dem Druck der Deponie bzw. des Erdreiches aufspreizt.

Rohrförmige Profilstränge kämen im übrigen einer Zugbelastung in der durch nebeneinander liegende Profilstränge gebildeten Abdichtungsbahn nach, ohne ihre Dichtung zu verlieren. Das gilt besonders für Rohre mit runden Querschnittsformen und geeigneten dünnen Abmessungen.

Besonders wirtschaftliche Abdichtungen entstehen mit Profilsträngen, die an besonders ausladenden Stegen miteinander verbunden sind.

Nach der Erfindung werden vorzugsweise Profilstränge aus Polyethylen verwendet. Polyethylen hat die Eigenschaft, daß sich der Reibungswert mit zunehmendem Druck verringert. Ferner ist es von Vorteil, die Ausnehmungen mit einer dünnen Haut zu verschließen. Das verhindert das Eintreten von Fremdpartikeln vor dem Ineinanderschieben der Rohre. Die dünne Haut läßt sich beim Ineinanderschieben leicht beseitigen.

In der Zeichnung sind verschiedene Ausführungsbeispiele der Erfindung dargestellt.

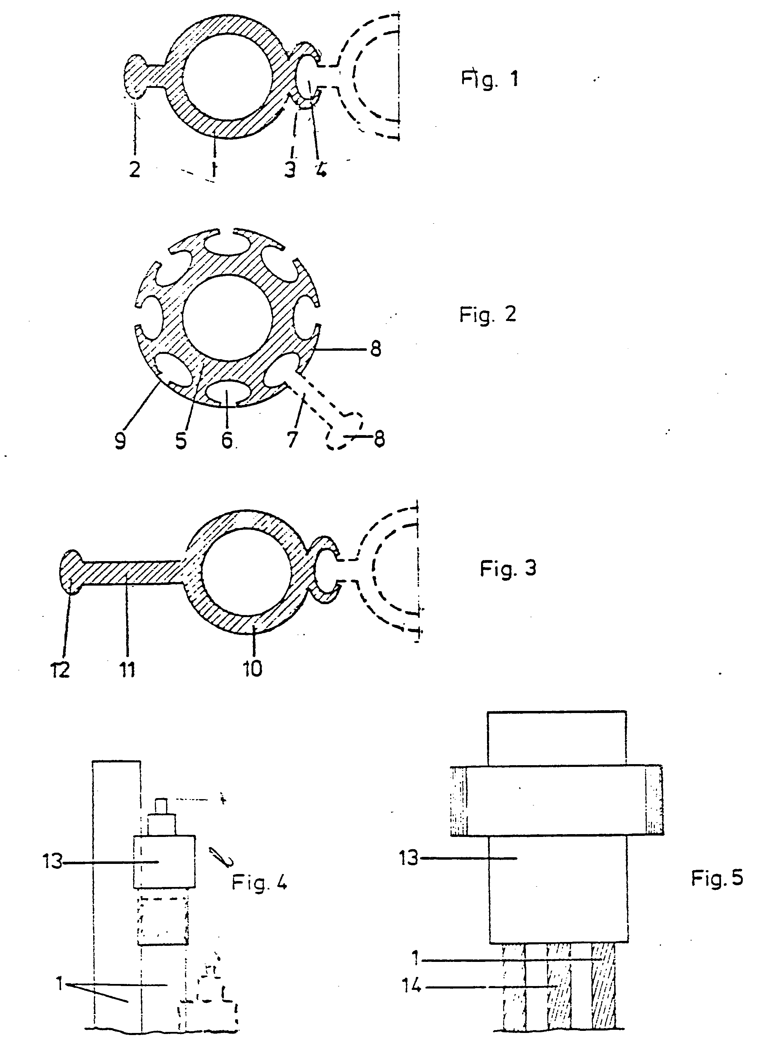

Nach Figur 1 besitzen die Profilstränge eine Rohrform 1. An die Rohrform 1 sind im Querschnitt einander diametral gegenüberliegende Teile 2 und 3 angeformt. Das Teil 2 ist im Querschnitt eine Nase, während Teil 3 im Querschnitt eine der Nase 2 entsprechende Ausnehmung 4 aufweist. In der Seitenansicht ist die Nase 2 ein am Rohr entlanglaufender Steg. Das gleiche gilt für das Teil 3. Bei der Montage wird jedes Rohr mit seiner Nase 2 in die Ausnehmung 4 des Teiles 3 am anderen Rohr geschoben bzw. gezogen.

Die Nasen 2 sind so ausgebildet, daß sie ein geringfügiges Verschwenken der Rohre 1 gegeneinander erlauben. Wahlweise legt sich das Teil 3 jedoch auch mit ausreichend breiter Fläche schließend an das andere Rohr an, so daß ein Verschwenken verhindert wird.

Nach Figur 2 ist jedes Rohr 5 mit einer Vielzahl gleichartiger Ausnehmungen 6 versehen. In die Ausnehmungen 6 greifen Stege 7 mit entsprechenden Nasen 8. Die Stege 7 können vorher jeweils in einem Rohr 5 an eine beliebige Umfangsstelle montiert und z. B. durch Schweißung gesichert werden. Sie lassen sich dann ohne weiteres gemeinsam mit den Rohren einziehen. Die Verbindung erfolgt dann wie nach Figur 1 mit dem daneben liegenden Rohr 5.

Zur Sicherung der Ausnehmungen 6 sind die Rohre 5 am Umfang mit einer, die Ausnehmungen 6 überdeckenden Haut 9 gleichen Materials versehen. Die Haut 9 kann auch durch eine geschlossene Umhüllung gebildet werden. Die Umhüllung ist so bemessen, daß sie beim Einschieben eines Steges mit der Nase 8 leicht aufgerissen wird.

Figur 3 zeigt ein Rohr 10, das bis auf einen Steg 11 zwischen der Nase 12 und dem Rohr dem Rohr nach Figur 1 entsprechen.

Figur 4 zeigt zwei Rohre 1, von denen das in Figur 4 liegende Rohr bereits verlegt worden ist, während das rechte Rohr mit einem Schlagwerkzeug 13 durch das Erdreich unterhalb einer abzudichtenden Deponie gezogen wird. Das in der Ansicht nach Figur 4 rechte Rohr 1 ist im Gehäuse des Schlagwerkzeuges 13 befestigt. Das Schlagwerkzeug 13 besitzt einen größeren Durchmesser als das Rohr 1. In der Darstellung nach Figur 4 ist der Durchmesser um so vieles größer, daß das Gehäuse des Schlagwerkzeuges 3 teilweise das in der Ansicht nach Figur 4 linke Rohr umschließt.

In Figur 4 ist ferner gestrichelt die Möglichkeit dargestellt, nach Verlegen eines Profilstranges zugleich mehrere Profilstränge einzuziehen. Voraussetzung ist, daß der in Figur 4 unmittelbar neben dem bereits gelegten Profilstrang eingezogene nächste Profilstrang einen Vorlauf von mindestens 5 m, vorzugsweise 10 m gegenüber dem nachfolgenden Profilstrang bzw. Schlaggerät aufweist. Der Vorlauf ist in Figur 4 mit L bezeichnet. Entsprechendes gilt für weitere, gleichzeitig eingesetzte Schlagwerkzeuge.

Der gleichzeitige Einsatz mehrerer Schlagwerkzeuge verkürzt den Zeitaufwand für das Einbringen der Horizontalabdichtung.

In Figur 5 ist das Schlagwerkzeug 13 mit dem Rohr 1 in einer Teilansicht dargestellt. Das Rohr 1 ist mit einer nicht dargestellten Verschraubung am Gehäuse des Schlagwerkzeuges 13 gehalten. Ferner befindet sich in dem Rohr 1 eine biegsame, aber torsionsfeste Welle 14. Die Welle 14 ragt hinten aus dem Rohr 1 heraus und zeigt ein unerwünschtes Verschwenken des Schlagwerkzeuges 13 um das in Figur 4 linke Rohr 1 an. Dem läßt sich dann durch Drehen des in Figur 4 rechten, am Gehäuse des Schlagwerkzeuges 13 befestigten Rohres 1 entgegenwirken.

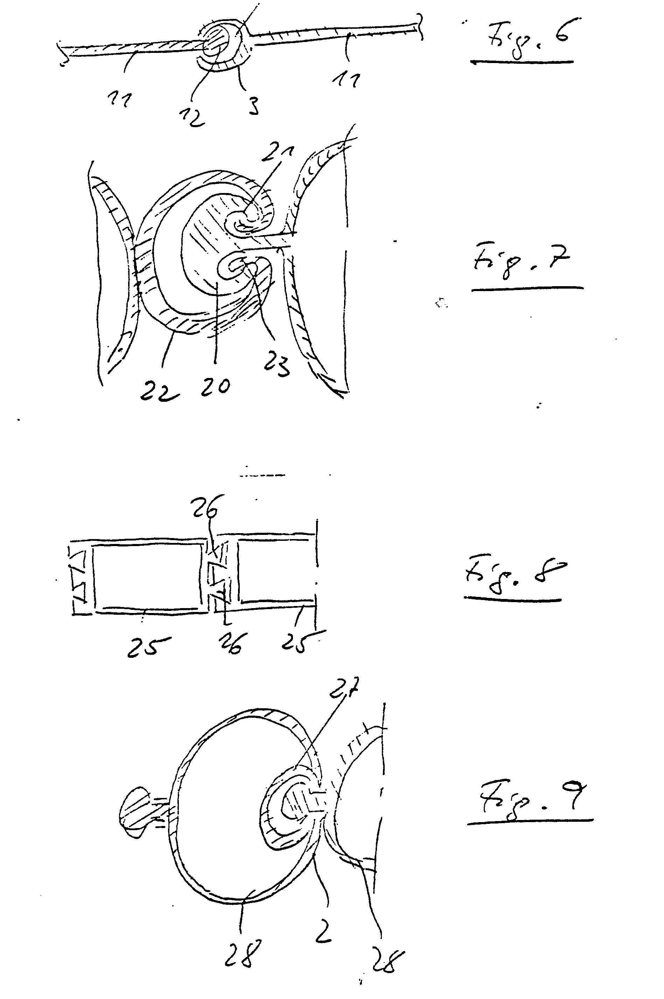

Gemäß Figur 6 können die dargestellten Profilstränge auch in der Weise abgewandelt werden, daß sie lediglich aus dem Steg 11, Nasen 12 und an der gegenüberliegenden Seite aus Teilen 3 mit Ausnehmungen 4 zum Umschließen der Nasen 12 bestehen.

Nach Figur 7 sind die mit 20 bezeichneten Nasen in einem weiteren Ausführungsbeispiel hinterschnitten. In die sich daraus ergebenden, nutförmigen Öffnungen 21 greift das die Nasen 20 umfassende Teil 22 mit einer Einwärtswölbung 23, so daß die Nase 20 ähnlich einem Widerhaken in dem Teil 22 sitzt.

Figur 8 zeigt Profilstränge, die aus Rohren 25 mit länglichem, rechteckförmigem Querschnitt bestehen. Jeweils 2 benachbarte Rohre 25 sind über 2 Federn und Nuten miteinander verbunden. Die mit 26 bezeichneten Federn haben einen schwalbenschwanzförmigen Querschnitt. Der Querschnitt der Nuten entspricht dem Querschnitt der Federn.

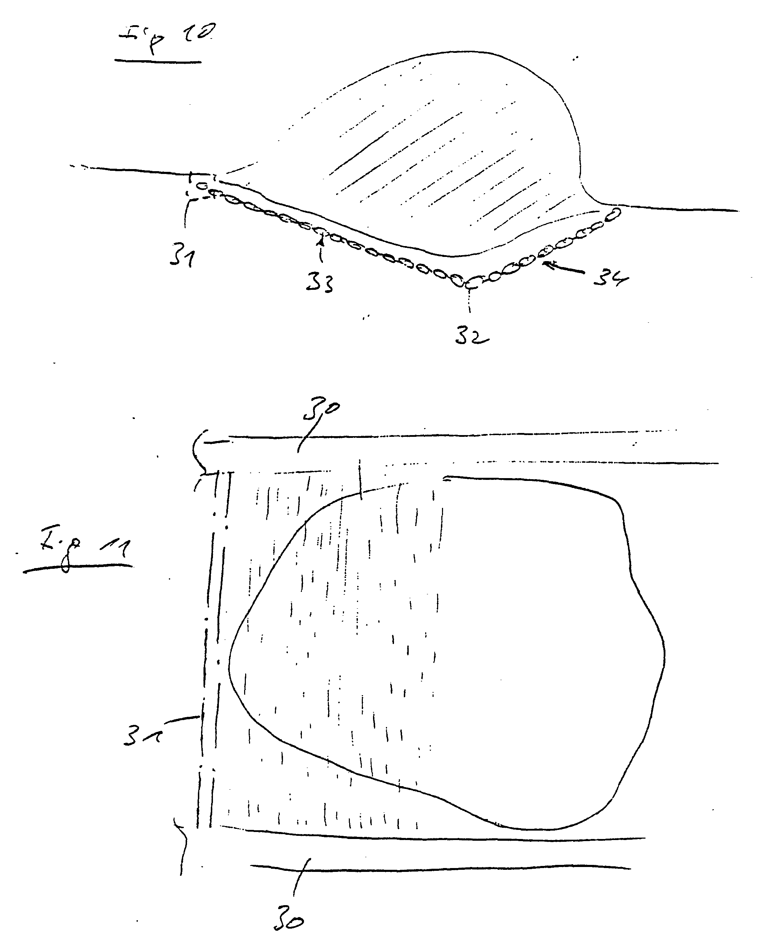

Die Profilstränge nach Figur 9 unterscheiden sich von denen nach Figur 1-3 dadurch, daß das die Nasen 2 umschließende Teil 27 nicht wie die Teile 3 an das Rohr 1 bzw. 10 angeflanscht, sondern in das Rohr 28 eingeformt worden ist. Das hat zur Folge, daß eine Zusammendrückung des Rohres 28 unter der Last des Erdreiches eine zangenartige Umklammerung des die Nase 2 mit dem Rohr 28 verbindenden Steges bewirkt. So entsteht eine weitgehende Abdichtung, auch dann, wenn das Teil 27 ein erhebliches Übermaß gegenüber der Nase 2 aufweist, welches ein besonders leichtes Einschieben ermöglicht.

Wahlweise wird die Abdichtung zwischen zwei Profilsträngen auch durch ein einzupressendes Dichtmittel gesichert. Dies erfolgt in der Ausnehmung 4 durch den sich zwischen den Teil 3 und den Nasen 4 bzw. 12 bzw. 20 ergebenden Spalt. Das Einpressen von Dichtungsmittel erfolgt nach Verlegen der Profilstränge unter Anschweißen oder Einschrauben geeigneter Anschlußstücke für eine Druckmittelzuleitung.

Die erfindungsgemäßen Profilstränge können alle horizontal eingebracht werden. Das erfolgt am Beispiel der Figuren 10 und 11 dadurch, daß zunächst Erdschlitze 30 ausgehoben werden, die ein Ansetzen des Schlagwerkzeuges 13 und der nachlaufenden Profilstränge sowie an Bergen des hinter der Deponie bzw. hinter der kontaminierten Fläche austretenden Schlagwerkzeuges 13 ermöglichen. Als erster Profilstrang wird wahlweise ein Profilstrang aus Stahl verwendet. Dieser nicht dargestellter Profilstrang aus Stahl wird in eine vorher seitlich der Deponie ausgehobene Grube 31 verlegt und genau ausgerichtet. Die Grube wird anschließend dann wieder verfüllt, wobei die Grube bis auf den Bereich, in dem der nächste Profilstrang zu verlegen ist, mit Erdbeton ausgefüllt wird. Der Erdbeton bildet eine Vertikalabdichtung.

An dem ersten, so gelegten Profilstrang kann der nächste nachfolgend verlegte Profilstrang sehr genau geführt werden. Dabei bilden die Profilstränge, wie aus Figur 10 ersichtlich, eine geneigte Ebene 33, die sich mit einer weiteren geneigten Ebene 34 zu einem Trichter ergänzt. Tiefstpunkt bildet ein Sonderprofilstrang 32, der zugleich den Sammler für Sickerwasser bildet. Dementsprechend ist der Profilstrang 32 an der zur Deponie gewandten Seite mit Öffnungen versehen. Zugleich kann der Profilstrang 32 ähnlich dem Profilstrang 5 nach Figur 2 ausgebildet sein oder über ein Zwischenglied nach Art des Profilstranges 5 mit den benachbarten Profilsträngen verbunden werden. Das ermöglicht eine Richtungsänderung beim Verlegen der Profilstränge. D. h. beginnend an dem ersten, in der Baugrube 31 verlegten Profilstrang können nacheinander und unter Richtungsänderung an dem Profilstrang 32 alle Profilstränge bis an die gegenüberliegende Seite der Deponie verlegt werden.

Bis auf den ersten Profilstrang aus Stahl bestehen alle übrigen Profilstränge aus Polyethylen. Polyethylen hat besonders hohe Dichteigenschaften, auch gegenüber Sickerwässern, wie sie in Deponien und kontaminierten Flächen anfallen.

Profilstränge nach Figur 6 werden vorzugsweise von der Rolle gezogen. Andere Profilstränge mit höherer Biegesteifigkeit können stückweise aneinander gesetzt werden. An der Nahtstelle werden die Strangabschnitte miteinander verschweißt.

Statt der geneigten Flächen 33 und 34 können auch Trichter mit einer einzigen geneigten Fläche hergestellt werden. In diesem Fall ergibt sich eine deutlich tiefere Anordnung für den als Sammler ausgebildeten Profilstrang 32.

Der aus Figur 10 und 11 ersichtliche Trichter wird stirnseitig und rückseitig mit senkrechten Wänden versehen. Das kann dadurch vermieden werden, daß die Profilstränge unter entsprechender Steuerung des Schlagwerkzeuges das Erdreich auf einer bogenförmigen Bahn durchlaufen. Durch Wahl unterschiedlicher Bogenformen kann eine Abdichtung in der Form einer Kalotte erzeugt werden. Das erübrigt den Aushub von Erdschlitzen und eine Problematik bei der Verwendung der Profilstränge mit Vertikalabdichtungswänden.

Die Herstellung unterschiedlicher bogenförmiger Bahnen wird durch Drehen mitgezogener Steuerrohre möglich, die anstelle der Elemente 14· in den rohrförmigen Profilsträngen sitzen und deren Drehen ein Abschwenken oder Aufwärtsschwenken des Schlagwerkzeuges gegenüber den bereits gelegten Profilsträngen ermöglicht.

**Patentansprüche**

1. Verfahren zur nachträglichen Abdichtung von Deponien und/oder kontaminierten Flächen, wobei unter die Deponie und/oder kontaminierte Fläche eine Abdichtung gebracht wird und das Erdreich unter der Deponie und/oder der kontaminierten Fläche eine Rücklage für die Abdichtung bildet, dadurch gekennzeichnet, daß nacheinander Profilstränge eingezogen oder eingeschoben werden, die sich beim Einziehen zu einer Abdichtungsbahn verbinden, wobei die Abdichtungbahn mit einer Neigung und/oder Wölbung verlegt wird, so daß an der tiefsten Stelle der Abdichtungsbahn die anfallenden Sicherwässer gesammelt und abgeführt werden.

2. Verfahren nach Anspruch 1, dadurch gekennzeichnet, daß jeder eingezogene oder eingeschobene Profilstrang für den nachfolgenden Profilstrang eine Führung bildet.

3. Verfahren nach Anspruch 2, gekennzeichnet durch die Verwendung eines biege- und/oder verwindungssteifen Profilstranges, zumindest für den ersten verlegten Strang.

4. Verfahren nach Anspruch 2 oder 3, dadurch gekennzeichnet, daß der erste Strang seitlich neben der Deponie und/oder kontaminierten Fläche in offener Baugrube verlegt wird.

5. Verfahren nach Anspruch 4, dadurch gekennzeichnet, daß die Baugrube nach Verlegung des ersten Stranges wieder geschlossen und das Erdreich anschließend verdichtet wird.

6. Verfahren nach Anspruch 4, dadurch gekennzeichnet, daß der erste verlegte Profilstrang in eine Vertikalabdichtung eingebunden wird.

7. Verfahren nach Anspruch 6, gekennzeichnet durch die Verwendung von Erdbeton und/oder Kunststoffolien für die Vertikalabdichtung.

8. Verfahren nach Anspruch 4, dadurch gekennzeichnet, daß in Abständen das Erdreich ausgehoben und die Bahn des ersten Profilstranges gemessen und korrigiert wird.

9. Verfahren nach Anspruch 8, dadurch gekennzeichnet, daß die Abstände 5-20 m betragen.

10. Verfahren nach Anspruch 9, dadurch gekennzeichnet, daß das Sickerwasser einer Wasseraufbereitung zugeführt wird.

11. Verfahren nach Anspruch 9 oder 10, dadurch gekennzeichnet, daß das Sickerwasser im Kreis geführt wird.

12. Verfahren nach Anspruch 10, gekennzeichnet durch die Verwendung von Aktivkohlefiltern für die Wasseraufbereitung.

13. Verfahren nach einem oder mehreren der Ansprüche 9-12, gekennzeichnet durch die Verwendung einer trichterförmig ausgebildeten Abdichtungsbahn.

14. Verfahren nach Anspruch 13, gekennzeichnet durch die Verwendung einer V-förmig angelegten Abdichtungsbahn.

15. Verfahren nach Anspruch 14, gekennzeichnet durch durch die Verwendung einer bogen- oder kalottenförmig ausgebildeten Abdichtungsbahn.

16. Verfahren nach Anspruch 9, dadurch gekennzeichnet, daß die Deponie und/oder die kontaminierte Fläche fortlaufend befeuchtet wird.

17. Verfahren nach einem oder mehreren der Ansprüche 1-16, dadurch gekennzeichnet, daß die Sickerwässer der Deponie und/oder kontaminierten Fläche zurückgeführt werden.

18. Verfahren nach einem oder mehreren der Ansprüche 1-17, gekennzeichnet durch die Verwendung von Profilsträngen (1), die über mindestens eine Nut (4) und Feder (2) miteinander verbunden sind.

19. Verfahren nach Anspruch 18, gekennzeichnet durch die Verwendung runder oder vieleckiger Profilquerschnitte, die jeweils Verbindungsstellen (6) aufweisen.

20. Verfahren nach Anspruch 18 oder 19, gekennzeichnet durch die Verwendung rohrförmiger Profilquerschnitte.

21. Verfahren nach Anspruch 18, gekennzeichnet durch die Verwendung von Profilsträngen, die im Querschnitt zwischen den beiden Nut und Feder bildenden Teilen flache Stege bilden.

22. Verfahren nach einem oder mehreren der Ansprüche 18-24, gekennzeichnet durch die Verwendung von Rohren, die porös und/oder als Sammler ausgebildet sind.

23. Verfahren nach einem oder mehreren der Ansprüche 18-22, gekennzeichnet durch die Verwendung von Rohren, die über zwischenliegende Stege (11) miteinander verbunden sind.

24. Verfahren nach einem oder mehreren der Ansprüche 18-23, gekennzeichnet durch die Verwendung von Profilsträngen, die bandförmig ausgebildet sind und im Querschnitt einen Steg besitzen, der an einem Ende mit einer Nut (4) und am anderen Ende mit einer Feder (2) versehen ist.

25. Verfahren nach einem oder mehreren der Ansprüche 21-24, gekennzeichnet durch die Verwendung einer im Querschnitt runden Nut und einer im Querschnitt runden Feder.

26. Verfahren nach einem oder mehreren der Ansprüche 21-25, gekennzeichnet durch die Verwendung eckiger Nut- oder Federquerschnitte.

27. Verfahren nach einem oder mehreren der Ansprüche 20-26, gekennzeichnet durch die Verwendung von Profilsträngen, die mit der Nut die Feder des anderen Profilstranges hakenförmig hintergreifen.

28. Verfahren nach einem oder mehreren der Ansprüche 20-27, gekennzeichnet durch die Verwendung einer Nut mit Übermaß, die mit Dichtmittel beaufschlagbar ist.

29. Verfahren nach einem oder mehreren der Ansprüche 20-28, gekennzeichnet durch die Verwendung einer Feder, die flexibel und/oder aufweitbar ausgebildet und mit einem Druck- und/oder Dichtmittel beaufschlagbar ist.

30. Verfahren nach Anspruch 29, gekennzeichnet durch die Verwendung einer Feder, die hohl und aus elastischem Material und/oder mit einer Einwärtswölbung oder Faltung versehen ist.

31. Verfahren nach Anspruch 29 oder 30, gekennzeichnet durch die Verwendung einer Feder, die im Bereich der Nut porös ausgebildet ist und/oder mit Durchtrittsöffnungen für das Dichtmittel versehen ist.

32. Verfahren nach einem oder mehreren der Ansprüche 29-31, gekennzeichnet durch ein aushärtendes Druck- und/oder Dichtmittel.

## Claims

1. Procedure for subsequently sealing disposal sites and/or contaminated areas, a seal being installed below the disposal site and/or contaminated area and the ground beneath the disposal site and/or contaminated area forming a retention for the seal, characterized in that profiled rods are pulled in or pushed in one after the other and these join together when pulled in to form a sealing course, the sealing course being laid with a slope and/or curvature so that the seepage waters encountered are collected and drained off at the deepest point of the sealing course.

2. Procedure according to Claim 1, characterized in that every pulled in or pushed in profiled rod forms a guide for the subsequent profiled rod.

3. Procedure according to Claim 2, characterized by the use of a bend-resistant and/or torsion-resistant profiled rod, at least for the first rod laid.

4. Procedure according to Claim 2 or 3, characterized in that the first rod is laid in an open installation trench at the side of and next to the disposal site and/or contaminated area.

5. Procedure according to Claim 4, characterized in that the installation trench is closed again after laying the first rod and the ground is then compacted.

6. Procedure according to Claim 4, characterized in that the first profiled rod laid is incorporated in a vertical seal.

7. Procedure according to Claim 6, characterized by the use of soil-cement and/or plastic sheets for the vertical seal.

8. Procedure according to Claim 4, characterized in that the ground is excavated at intervals and the track of the first profiled rod is measured and corrected.

9. Procedure according to Claim 8, characterized in that the intervals are 5-20 m.

10. Procedure according to Claim 9, characterized in that the seepage water is fed to a water treatment system.

11. Procedure according to Claim 9 or 10, characterized in that the seepage water is circulated.

12. Procedure according to Claim 10, characterized by the use of active carbon filters for the water treatment.

13. Procedure according to one or more of Claims 9-12, characterized by the use of a sealing course of funnel-shaped construction.

14. Procedure according to Claim 13, characterized by the use of a sealing course installed in a V-shape.

15. Procedure according to Claim 14, characterized by [sic] the use of a sealing course of arch-shaped or dish-shaped construction.

16. Procedure according to Claim 9, characterized in that the disposal site and/or the contaminated area is continuously moistened.

17. Procedure according to one or more of Claims 1-16, characterized in that the seepage waters are returned to the disposal site and/or contaminated area.

18. Procedure according to one or more of Claims 1-17, characterized by the use of profiled rods (1) which are joined to each other by at least one groove (4) and tongue (2).

19. Procedure according to Claim 18, characterized by the use of round or polygonal profiled cross sections which each have joining points (6).

20. Procedure according to Claim 18 or 19, characterized by the use of tubular profiled cross sections.

21. Procedure according to Claim 18, characterized by the use of profiled rods which form webs in the cross section between the two parts forming groove and tongue.

22. Procedure according to one or more of Claims 18-24, characterized by the use of tubes which are constructed porously and/or as collectors.

23. Procedure according to one or more of Claims 18-22, characterized by the use of tubes which are joined to each other by means of intervening webs (11).

24. Procedure according to one or more of Claims 18-23, characterized by the use of profiled rods which are of strip construction and have, in cross section, a web which is provided at one end with a groove (4) and at the other end with a tongue (2).

25. Procedure according to one or more of Claims 21-24, characterized by the use of a groove, round in cross section, and a tongue, round in cross section.

26. Procedure according to one or more of Claims 21-25, characterized by the use of angular groove or tongue cross sections.

27. Procedure according to one or more of Claims 20-26, characterized by the use of profiled rods the groove of which engages behind the tongue of the other profiled rod in a barb-like manner.

28. Procedure according to one or more of Claims 20-27, characterized by the use of a groove having oversize to which sealing agent can be applied.

29. Procedure according to one or more of Claims 20-28, characterized by the use of a tongue which is of flexible and/or enlargable construction and to which a pressurized agent and/or sealing agent can be applied.

30. Procedure according to Claim 29, characterized by the use of a tongue which is hollow and of elastic material and/or is provided with an inward curvature or fold.

31. Procedure according to Claim 29 or 30, characterized by the use of a tongue which is porously constructed in the region of the groove and/or is provided with passage openings for the sealing agent.

32. Procedure according to one or more of Claims 29-31, characterized by a curing pressurized agent and/or sealing agent.

## Revendications

1. Procédé pour rendre étanche a posteriori des décharges et/ou des surfaces contaminées, selon lequel une étanchéité est apportée sous la décharge et/ou la surface contaminée et le terrain sous la décharge et/ou la surface contaminée sert d'appui à l'étanchéité, caractérisé en ce qu'on introduit les unes après les autres, en tirant ou en poussant, des barres profilées qui se relient, lors de l'introduction, pour former une paroi d'étanchéité, la paroi d'étanchéité étant posée avec une pente et/ou une courbure, de façon qu'au point le plus bas de la paroi d'étanchéité, les eaux d'infiltration qui s'écoulent puissent être rassemblées et évacuées.

2. Procédé suivant la revendication 1, caractérisé en ce que chaque barre profilée introduite en tirant ou en poussant constitue un guidage pour la barre profilée suivante.

3. Procédé suivant la revendication 2, caractérisé par l'utilisation d'une barre profilée rigide à la flexion et/ou à la torsion, au moins pour la première barre posée.

4. Procédé suivant la revendication 2 ou 3, caractérisé en ce que la première barre est posée en fosse ouverte, sur le côté de la décharge et/ou de la surface contaminée.

5. Procédé suivant la revendication 4, caractérisé en ce que la fosse est refermée après la pose de la première barre et en ce qu'ensuite le terrain est rendu étanche.

6. Procédé suivant la revendication 4, caractérisé en ce que la première barre profilée posée est incorporée dans une étanchéité verticale.

7. Procédé suivant la revendication 6, caractérisé par l'utilisation de béton de terre et/ou de feuilles de matière plastique pour l'étanchéité verticale.

8. Procédé suivant la revendication 4, caractérisé en ce qu'on enlève le terrain de distance en distance et on mesure et corrige la trajectoire de la première barre profilée.

9. Procédé suivant la revendication 8, caractérisé en ce que les distances sont de 5 à 20 m.

10. Procédé suivant la revendication 9, caractérisé en ce que l'eau d'infiltration est conduite à une station de traitement de l'eau.

11. Procédé suivant la revendication 9 ou 10, caractérisé en ce que l'eau d'infiltration est recyclée.

12. Procédé suivant la revendication 10, caractérisé par l'utilisation de filtres au charbon actif pour le traitement de l'eau.

13. Procédé suivant une ou plusieurs des revendications 9 à 12, caractérisé par l'utilisation d'une paroi d'étanchéité réalisée en forme d'entonnoir.

14. Procédé suivant la revendication 13, caractérisé par l'utilisation d'une paroi d'étanchéité disposée en forme de V.

15. Procédé suivant la revendication 14, caractérisé par l'utilisation d'une paroi d'étanchéité réalisée en forme courbe ou en forme de cuvette.

16. Procédé suivant la revendication 9, caractérisé en ce que l'on humidifie en continu la décharge et/ou la surface contaminée.

17. Procédé suivant une ou plusieurs des revendications 1 à 16, caractérisé en ce que les eaux d'infiltration de la décharge et/ou de la surface contaminée sont réintroduites.

18. Procédé suivant une ou plusieurs des revendications 1 à 17, caractérisé par l'utilisation de barres profilées (1) qui sont assemblées entre elles au moyen d'au moins une rainure (4) et une languette (2).

19. Procédé suivant la revendication 18, caractérisé par l'utilisation de profilés de section ronde ou polygonale, présentant des points d'assemblage (6).

20. Procédé suivant la revendication 18 ou 19, caractérisé par l'utilisation de profilés à section en forme de tube.

21. Procédé suivant la revendication 18, caractérisé par l'utilisation de barres profilées qui présentent, en section, entre les deux pièces formant rainure et languette, des ailes plates.

22. Procédé suivant une ou plusieurs des revendications 18 à 21, caractérisé par l'utilisation de tubes qui sont poreux et/ou réalisés comme collecteur.

23. Procédé suivant une ou plusieurs des revendications 18 à 22, caractérisé par l'utilisation de tubes qui sont reliés entre eux au moyen d'entretoises (11) placées entre eux.

24. Procédé suivant une ou plusieurs des revendications 18 à 23, caractérisé par l'utilisation de barres profilées qui sont réalisés en forme de paroi et qui présentent sur leur section une aile munie, à une extrémité, d'une rainure (4) et, à l'autre extrémité, d'une languette (2).

25. Procédé suivant une ou plusieurs des revendications 21 à 24, caractérisé par l'utilisation d'une rainure de section ronde et d'une languette de section ronde.

26. Procédé suivant une ou plusieurs des revendications 21 à 25, caractérisé par l'utilisation d'une rainure de section angulaire et d'une languette de section angulaire.

27. Procédé suivant une ou plusieurs des revendications 20 à 26, caractérisé par l'utilisation de barres profilées dont la rainure s'accroche par derrière à la languette de l'autre barre profilée.

28. Procédé suivant une ou plusieurs des revendications 20 à 27, caractérisé par l'utilisation d'une rainure présentant un surdimensionnement et dans laquelle on peut injecter un produit d'étanchéité.

29. Procédé suivant une ou plusieurs des revendications 20 à 28, caractérisé par l'utilisation d'une languette qui est souple et/ou qui peut s'élargir et que l'on peut injecter avec un fluide de pression ou un produit d'étanchéité.

30. Procédé suivant la revendication 29, caractérisé par l'utilisation d'une languette qui est creuse et faite d'un matériau élastique et/ou qui est munie d'une cambrure ou d'une pliure tournée vers l'intérieur.

31. Procédé suivant la revendication 29 ou 30, caractérisé par l'utilisation d'une languette qui, dans la zone de la rainure, est réalisée poreuse et/ou est munie d'ouvertures de passage pour le produit d'étanchéité.

32. Procédé suivant une ou plusieurs des revendications 29 à 31, caractérisé par un produit d'étanchéité et/ou de pression durcissable.

Fig. 1

Fig. 2

Fig. 3

Fig. 4

Fig. 5

4

_Fig. 6_

11    12    3    11

21

_Fig. 7_

22    20    23

26

_Fig. 8_

25    26    25

27

_Fig. 9_

28    2    28

2

Fig 10

31

33

32

34

Fig 11

30

31

30